# EUROPEAN PATENT APPLICATION

(11) **EP 2 192 707 A1**
(43) Date of publication of application: **02.06.2010**
(21) Application number: 08105867.9
(22) Date of filing: 26.11.2008
(51) Int. Cl.: H04B 17/00

(54) **Method of calibrating an active antenna and active antenna**

(71) Applicant: Nokia Siemens Networks OY, 02610 Espoo (FI)
(72) Inventor: Heikkinen, Eero, 90540 Oulu (FI); Pallonen, Jorma, 02400 Kirkkonummi (FI)
(74) Representative: Bruglachner, Thomas E.

(57) **Abstract**

A method of calibrating an active antenna and an active antenna is disclosed, wherein the active antenna is designed to be used in a base transceiver station for mobile communication. Firstly, at least one receiver (RX) of the active antenna is correlated to a calibration signal. Secondly, a received phase pattern is analyzed. Then, the active antenna is adjusted until all receivers (RX) receive substantially in equiphase. Finally, a beam forming function and a phase pattern are applied as forward adjustment to the active antenna.

## Description

The invention is directed to a method of calibrating an active antenna, which active antenna is designed to be used in a base transceiver station for mobile communication. Furthermore, the invention is related to an active antenna, designed to be used in a base transceiver station for mobile communication.

An active antenna is an antenna, in which a number of antenna elements form a larger antenna array. Several radio transceivers are directly connected to these antenna elements, and they act like a single transceiver connected to a similar size of antenna array. The goal for such an arrangement is to achieve a desired radiation pattern (radio beams), Equivalent Isotropic Radiated Power (EIRP), and sensitivity. However, such an antenna array just provides satisfying function if the power (amplitude) and the phase of the emitted radio waves is known and can be controlled.

Modern antenna arrays usually have means to measure and control the power accurately without a separate feedback system. However, measuring the phase of the radio waves is more complicated.

The traditional way of measuring the phase consists of a set of directional couplers in known locations at the feed point of the antennas and a set of electrically known length RF cables. That is both expensive and difficult to manufacture.

To overcome the difficulty, a probe to measure phase delay and amplitude difference between the individual transceivers of the active antenna has been proposed recently. This probe is located in the electrical center point of the antenna array, and it measures the radiated phases of the symmetrically located antenna elements or sub-arrays in pairs. This method is fairly cheap and easy to design.

The probe, although it is neither excessively complex nor expensive, is an additional piece of hardware, which causes costs and manufacturing effort. It is also an additional source of defect. Because normally one single phase probe is used, a single fault in the probe can cause a malfunction of the whole active antenna. This is especially displeasing as a proper active antenna design provides a lot of in-built redundancy.

Also the unavoidable uncertainty in defining the electrical centre point of the individual antenna elements for the probe is another source of uncertainty of the measurement.

However, some kind of calibration feedback system is required, as the accuracy of the entities in the forward branch, e.g. clocks, oscillators, etc. is not sufficiently high (due to practical and technological reasons) so that means for RF phase calibration could be omitted.

It is also possible to calibrate the receivers of the active antenna using any available input having unknown direction of incidence and unknown spatial distribution. This signal does not have to be generated by the active antenna itself. The signal, however, needs to have a sufficient amount of variation in the spatial distribution to ensure the required performance of the correlator.

A good example are the multi antenna type picture making radiometer receivers, e.g. in satellites. They are typically correlated to the incoming signal that is by default thermal noise. The correlation is possible if there is spatial distribution in the signal, e.g. there are one or more bright points that have clearly higher brightness temperature than the surroundings. The two dimensional correlator can detect the angle of incidence for those peaks and adjust the receiver phases so that the variation in the brightness temperature is maximized and the hot spots reach their maximum value. When these conditions are met, the phase distribution in the whole receiver array is known and the receiver data can be further processed using any required equation or algorithm needed for the purpose, e.g. beam forming (is a signal processing technique used in sensor arrays for directional signal transmission or reception) or MIMO (multiple-input and multiple-output - is the use of multiple antennas at both the transmitter and receiver to improve communication performance. MIMO is one of several forms of smart antenna technologies).

The signal for the receiver of a telecom base transceiver station (BTS receiver) can be thermal noise also. It is available everywhere, but a sufficient spatial direction in the sense of angle of incidence cannot be guaranteed, i.e. there are probably not sufficient bright spots in the visible area for the active antenna. The bigger the antenna, the easier it is to find such a hot spot because the angular selectivity of the active antenna increases when the size and complexity of the structure are increased. The other possible external signal sources are the mobile phones of the system itself, separate calibration sources at the operating band, or modified BTS transmitters at the neighboring sites. Such transmitters are able to send a test signal at the transmitter band (TX band) of the mobile phones.

Calibrating the receiver is only half of the solution of active antenna calibration problem as transmitter calibration is required as well. Transmitter calibration has traditionally been done using directional couplers and a set of phase calibrated RF cables in between the phase measurement unit of one or more phase probes in the vicinity of the antenna array. Unfortunately, this approach requires additional equipment, which increases the technical complexity and thus decreases the reliability of the system. However, the probe as mentioned hereinbefore can be used for transmitter calibration also.

Accordingly, the object of the invention is to provide an improved method of calibrating an active antenna.

According to the invention, this object is achieved by a method according to claim 1 and an active antenna according to claim 9.

Accordingly, a method of calibrating an active antenna is disclosed, which active antenna is designed to be used in a base transceiver station for mobile communication, the method comprising the steps of:
a) correlating at least one receiver of the active antenna to a calibration signal;
b) analyzing a received phase pattern and adjusting the active antenna until all receivers receive substantially in equiphase; and
c) applying a beam forming function and a phase pattern as forward adjustment to the active antenna.

Accordingly, also an active antenna is disclosed, designed to be used in a base transceiver station for mobile communication, the antenna comprising:
a) at least one receiver;
b) a correlator to correlate the least one receiver to a calibration signal;
c) an analyzer for analyzing a received phase pattern and adjusting the active antenna until all receivers receive signals substantially in equiphase; and
d) means for applying a beam forming function and a phase pattern as forward adjustment to the active antenna.

It should be noted that 'correlation' means 'comparing at least two signals' in the context of the invention. For example phase/delay differences and/or amplitude differences between received signals at the receive and/or transmit band are detected. 'Correlator' means any device or entity which is capable of detecting such a difference.

It should also be noted that 'at least one receiver' and 'at least one transmitter' preferably may also mean 'all receivers' and 'all transmitters'. While calibration of less than all receivers and transmitters allow calibration of the whole system to some extent, calibration of all receivers and transmitters provides for an as best as possible system calibration.

The invention offers the advantage that the calibration of the receiver and/or transmitter of an active antenna of an base transceiver station (BTS) requires just little technical adaptations of existing BTSs. Thus, the equipment of a BTS can be re-used and hence provide an additional function.

Furthermore, the inventive solution is superior over known solutions because no additional feedback system on system level is required. Such a feedback system usually is both expensive and a source of errors. The modified BTS system is able to provide the required feedback for the active antenna calibration with sufficient performance without additional cost.

For the concerns of the invention, the receivers of the transmitters of a BTS should be equipped with means that allow them to receive at the receive band and/or transmit band. These means can be the same that are used for RF loops. They need not to have superb phase repeatability over the individual realizations of the design because they are included in the original calibration and are used to calibrate the phases of the transmitter in the exactly same configuration afterwards, which configuration is used for the initial calibration of the receivers. Furthermore, the antennas or the feed lines between the transceivers and the antennas should be equipped with means that are able to be switched on when they are required to reflect sufficient portion of the transmitted power back toward the own receivers. This reflection should occur in a precisely known location from the electrical center of the antenna of the transceiver and should be of such nature that it has no ambiguity in the phase of the reflected signal i.e. the reflection occurs in a single physical point and has no depth in the sense of time or distance. Furthermore, all reflections should be identical from radio to radio. This may be accomplished with relatively low technical effort.

The transmitter calibration comprises a conversion (switching) of the receivers to the own transmit band of the transceiver. Then, the set of receivers of the active antenna are correlated to a proper source of calibration signal at the spoken band. For example, this source can be a neighboring BTS transmitter or thermal noise, especially for the larger antenna arrays.

Then the reflection means are switched on and the receivers start receiving signals from the transmitters in the same radios. The phase pattern is analyzed using the same means that are used to analyze the receiver phase pattern. Knowing that the receivers have already been adjusted so that they receive in the same phase, the calibration problem is solved when all the receivers are receiving their transmitters in equiphase. When the calibration is done, the required beam forming functions and phase patterns can be applied as forward adjustment without the need of a separate feedback.

Receiver calibration can be executed continuously for all possible radio systems the active antenna is serving. It does not disturb the normal operation. Usually, the transmitter calibration disturbs the payload transmission and reception. However, if a low level of reflection for the transmitter feedback is used, the means for frequency conversion may be used in parallel with the normal reception. This can be achieved with relatively low technical effort in WCDMA systems (Wideband Code Division Multiple Access Systems) and causes only a small decrease in the maximum available capacity there. For other systems, e.g. GSM/EDGE (Global System for Mobile Communications / Enhanced Data Rates for GSM Evolution) and LTE (3GPP Long Term Evolution) the calibration signal has to be arranged so that it does not overlap the channels for normal operation of the BTS and the level of the calibrations signal is substantially lower than the levels in said channels so that it does not disturb the payload traffic too much.

It should be noted that the frequency conversion means can be used for other measurement of the transceivers also if proper interfaces are provided.

Furthermore, the direction of the antenna normal can be detected by extending the search of the correlation beyond the useful correlation angle range and assuming the normal to be in the middle of the points where the correlation disappears.

Finally, it is beneficial if the reflection means are switch able because in the on-state they are causing a loss of performance of the active antenna.

Preferred embodiments of the invention can be found in the dependent claims as well as in the description and the figures.

It is advantageous if a method of calibrating the receiver of the active antenna, comprises the steps of:
a1) correlating the at least one receiver to a calibration signal at a receiver band;
b1) analyzing a received phase pattern and adjusting the active antenna until all receivers receive substantially in equiphase; and
c1) applying a beam forming function and a phase pattern as forward adjustment to the receivers of active antenna, wherein steps a1-c1) are performed instead of steps a)-c).
This method is directed to receiver calibration only. So, if it is just required to calibrate the receivers of an active antenna, this method provide an advantageous solution.

In this context it is advantageous if the method comprises the steps of:
a2)switching off transmitters of the active antenna before step a1) and
d) switching on the transmitters after step c1).
These steps are performed if it is required to ensure sufficient operating conditions for the receiver calibration, e.g. to prevent the transmitted payload signals or noise to desensitize the receivers or to prevent phase errors in receiver calibration.

It is advantageous if a method of calibrating a transmitter of the active antenna, comprises the steps of:
a0) switching at least one receiver of the active antenna to a transmit band of at least one transmitter of the active antenna;
a1) correlating the at least one receiver to a calibration signal at the transmit band;
b1) switching on the reflection means so that the at least one receiver receives a signal at the transmit band;
c1) analyzing a received phase pattern and adjusting the active antenna until all receivers receive signals from the transmitters substantially in equiphase; and
d) applying a beam forming function and a phase pattern as forward adjustment to the active antenna, wherein steps a1)-c1) are performed instead of steps a)-c).
This method is directed to transmitter calibration only. So, if it is just required to calibrate the transmitters of an active antenna, this method provide an advantageous solution.

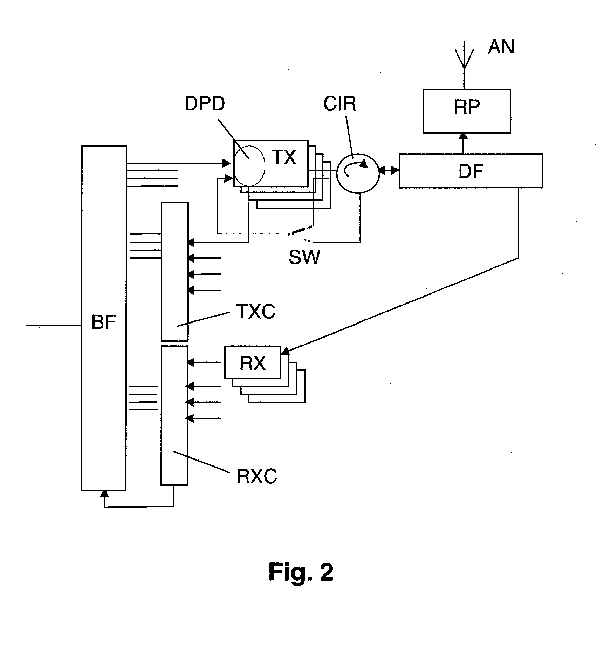

In a preferred first embodiment (see also Fig. 2), the inventive calibration of the transmitters comprises the steps of:
a2) turning off the transmitters before step a0);
a3) capturing phase and delay of a calibration signal at the transmit band instead of step a1);
c2) turning on the transmitters and
c3) calibrating the at least one transmitter using phase and delay values of the reflected transmitter signal read from a digital pre distortion device instead of step c1).
This embodiment of the invention offers the advantage that most of the required equipment can be found in present antenna arrays, e.g. a RF loop for frequency transformation, a correlator and a phase adjustment. Apart from rearranging existing equipment, reflection means and associated switching means should be added.

Another advantageous embodiment (see also Fig. 2) of the invention comprises the step of:
a4) calibrating the at least one receiver using external noise received through the antenna at a receiver band before step a0) respectively step a2).
Advantageously, also the receivers are calibrated. Because this is done before calibrating the transmitters, an already calibrated receiver can be used for the inventive method.

In yet another advantageous embodiment of the invention, the method comprises the steps of:
a5) switching off the transmitters before step a4)
a6) applying a beamforming function after step a4) and skipping step a2) if there is a step a2) else
a6) applying a beamforming function and subsequently turning on again the transmitters after step a4).
In this way, the receivers can be calibrated at receiver band even if the reception sensitivity and phase accuracy would be deteriorated by the interference from the own transceivers.

It is beneficial, if a calibration signal is used, which does not overlap the channels used for normal operation of the base transceiver station and whose level is substantially lower than the level used for said channels. If the calibration procedure is executed during normal operation of the BTS, the calibration should not interfere with the normal operation. By choosing an appropriate channel and an appropriate level for the calibration signal, this requirement can be fulfilled.

It is advantageous if the active antenna comprises:
a) at least one receiver, which is able to receive signals at receive band;
b) a correlator to correlate the at least one receiver to a calibration signal at the receive band;
d) means for applying a beam forming function and a phase pattern as forward adjustment to the receivers of the active antenna.
This active antenna is directed to receiver calibration only. So, if it is just required to calibrate the receivers, this embodiment of an active antenna provides an advantageous solution.

Furthermore, it is advantageous if the active antenna comprises:
a0) at least one transmitter designed to transmit signals at a transmit band;
a) at least one receiver, which is able to receive signals at said transmit band; and
a1) means for reflecting a portion of the power of the transmitted signals back to said at least one receiver;
b) a correlator to correlate the at least one receiver to a calibration signal at the transmit band;
c) an analyzer for analyzing a received phase pattern and adjusting the active antenna until all receivers receive signals from the transmitters substantially in equiphase;
d) means for applying a beam forming function and a phase pattern as forward adjustment to the transmitters of the active antenna.
This active antenna is directed to transmitter calibration only. So, if it is just required to calibrate the transmitters, this embodiment of an active antenna provides an advantageous solution.

In yet another advantageous embodiment the active antenna comprises:
a0) at least one transmitter designed to transmit signals at a transmit band;
a) at least one receiver, which is able to receive signals at receive band and said transmit band;
a1) means for reflecting a portion of the power of the transmitted signals back to said at least one receiver;
b) a correlator to correlate the at least one receiver to a calibration signal at the receive band and the transmit band;
c) an analyzer for analyzing a received phase pattern and adjusting the active antenna until all receivers receive signals from the transmitters substantially in equiphase; and
d) means for applying a beam forming function and a phase pattern as forward adjustment to the receivers and transmitters of the active antenna.
This active antenna is directed to both receiver and transmitter calibration. So, this embodiment of an active antenna provides an advantageous and comprehensive solution for calibrating an active antenna.

Advantageously, the reflecting means are designed in such a way that the reflection occurs in a single point and the reflected signal is identical for each receiver. This measure provides for an exact calibration of the transmitters and receivers. However, deviations from this ideal arrangement usually cannot be avoided and can be considered in the calibration procedure if known.

Finally it is beneficial, if the inventive antenna comprises the features hereinafter:
- a receiver correlator is connected to a beam former, and the at least one receiver is connected to the receiver correlator;
- the at least one transmitter is connected to said beam former;
- a transmitter correlator is connected to the beam former; and
- at least one duplex filter is connected to the at least one transmitter via at least one circulator and directly connected to the at least one receiver.
In this embodiment, the relatively easy implementation of the invention by use of existing equipment is particularly visible. Said parts are used in existing BTS anyway and can perform an additional function now.

The various means used in an active antenna can be embodied in software, hardware, or a combination of software and hardware. In particular, if an embodiment in software is chosen, this means have rather a functional meaning than a physical meaning.

The embodiments of the invention disclosed hereinbefore can be combined in any desired way. In particular it should be noted that transmitter and receiver calibration may be done in any desired order.

These and other aspects of the invention are apparent from and will be elucidated with reference to the embodiments described and shown in the schematic Figure hereinafter.
Figure 1 shows an arrangement according to prior art;
Figure 2 shows a first embodiment of the invention;
Figure 3 shows a second embodiment of the invention with a common calibration module, which module is known from prior art.

In the Figs. the same elements and elements with the same function are referenced with the same reference sign if not stated otherwise.

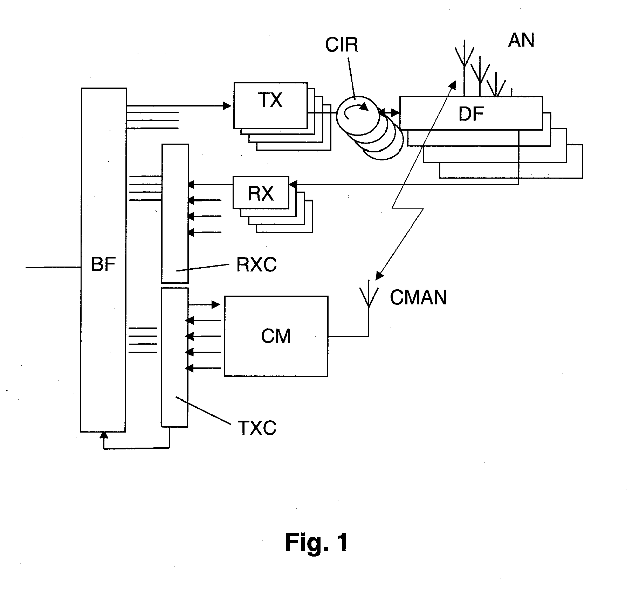

Fig. 1 depicts a prior art arrangement showing a beam former BF, a transmitter correlator TXC connected to the beam former BF, a receiver correlator RXC connected to the beam former BF and a number of transmitters TX connected to the beam former BF. Circulators CIR are connected to the transmitters TX and duplex filters DF are connected to the circulators CIR. Furthermore, the duplex filters DF are connected to a number of receivers RX, which are connected to the receiver correlator RXC. Finally, the duplex filters DF are connected to antennas AN. Furthermore, the arrangement comprises a calibration module CM connected to the transmitter correlator TXC. Finally, an antenna of calibration module CMAN (also referred to as 'probe' hereinafter) is connected to the calibration module CM.

The function of the prior art depicted in Fig. 1 is as follows:

Recently, a probe CMAN to measure phase delay and amplitude difference between the individual transceivers of the active antenna has been proposed. This probe CMAN is located in the electrical center point of the antenna array, and it measures the radiated phases of the symmetrically located antenna elements or sub-arrays in pairs. This method is fairly cheap and easy to design.

Firstly, the receivers RX are calibrated using the signal from the transmitter of the calibration module CM at the receive band. The individual antenna elements of the active antenna have to be arranged as symmetrical pairs relative to a probe CMAN, which is located in the electrical center point of the antenna array and measures the radiated phases of the symmetrically located antenna elements or sub-arrays in pairs. All antenna elements must belong to at least two separate symmetry pairs. If this is not possible with a single probe CMAN, additional probes CMAN must be used according to the prior art. Calibration accuracy depends on the accurately symmetrical arrangement of the individual antenna elements relative to the probe(s) CMAN. The more accurate the symmetrical arrangement, the more accurate the calibration is. The receiver correlator RXC correlates each of the two antennas of each of the symmetry pairs to calculate the timing and delay and power distribution.

Secondly, transmitter calibration is performed so that each of the symmetry pairs are calibrated at a time and all other transmitters TX are shut down during a transmitter calibration of the symmetry pair. The transmitter correlator TXC, which is connected to the common module CM, is used to correlate the transmitters TX of the active antenna. This calibration is also requires a precisely known and correct electrical location of the probe CMAN.

Fig. 2 depicts a first embodiment of the invention and shows a beam former BF, a transmitter correlator TXC connected to the beam former BF, a receiver correlator RXC connected to the beam former BF and a number of transmitters TX connected to the beam former BF. The transmitters TX comprise a digital pre distortion device DPD in a feedback branch. A circulator CIR is connected to the transmitters TX and a duplex filter DF is connected to the circulator CIR. Furthermore, the duplex filter DF is connected to a number of receivers RX, which are connected to the receiver correlator RXC. Finally, the duplex filter DF is connected to an antenna AN. Between the transmitters TX and the circulator CIR a switch SW is arranged, which selectively connects one of the connectors of the circulator CIR with the transmitters TX. Finally, a reflection point RP is arranged nearby the antenna AN.

The function of the embodiment depicted in Fig. 2 is as follows:

Firstly, the receivers RX are calibrated using external noise received trough antennas at the receiver band. Secondly, a scanning from -90 degrees to +90 degree provides the antenna radiator plane normal (here the correlation vanishes). Thirdly, pre distortion devices DPD are used as receivers to capture a calibration signal as during the receiver calibration to find out the timing and delay pattern of the antenna array and hence that of the reflection devices also. The own transmitters TX are switched off during this procedure. Fourthly, the transmitters TX are calibrated using signal phase and delay values of the reflected own transmitter signal read from the digital pre distortion device DPD. The calibration of the receivers RX and the transmitters TX may be continued on-line, wherein transmitter calibration takes place between normal adaptations of the digital pre distortion device DPD with forward signal. From time to time, the procedure can be re-executed from step 3.

In the present example, the correlator detects phase and delay (and amplitude) differences between received signals at receiver band. The separation of own transmitter signals is based on scrambling codes, or for example based on pilot signals at a different frequency. Feedback from the digital pre distortion device DPD is used for precise hardware based comparison of phase and delay of the neighbor transmitters and the own signal reflection. The reflection point can be embodied as a intentionally generated impedance miss-match or as just a radiator element.

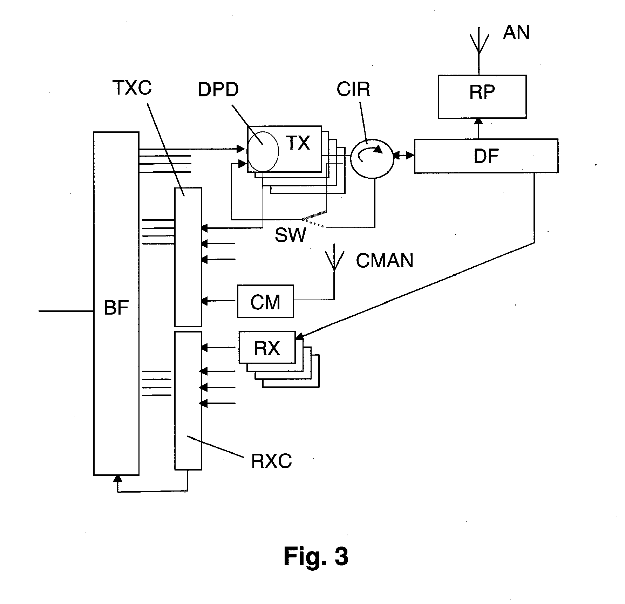

Fig. 3 depicts a second embodiment of the invention. In addition to the arrangement according to Fig. 2, a common calibration module CM and the probe CMAN (like the one used in Fig. 1) are connected to the transmitter correlator TXC. Accordingly, both the digital pre distortion device DPD and the common calibration module CMAN are input to the transmitter correlator TXC. This embodiment is an improvement over prior art according to Fig. 1 using the invention shown in Fig. 2.

The function of the embodiment depicted in Fig. 3 is as follows:

Firstly, the timing of the transmitters TX are measured using an external source and by means of the feedback signals of the pre distortion devices DPD using the transmitter correlator TXC as in the embodiment in Fig. 2. Thus, the precise timing and phasing of the transmitters TX can be determined. Next, the transmitter of the calibration module CM is used, and the delays and phases of the measured signal are compared to the results obtained in the first step. Now, the delay and phase values between the probe CMAN and each of the actual transceiver antennas in equiphase are calculated and saved. An advantage of this embodiment is that the location of the probe CMAN needs not to be known because it can be measured very accurately in a production environment by using an optimized external signal source and then at the field whenever there is a suspect that parameters have been changed. Furthermore, the same delays which have been measured for transmit band can be assumed to be valid also for the receiver band. However, it is important that the same antennas are used for transmission and reception.

Optionally, the receivers RX may be calibrated first, and then the calibration module CM is used to send a calibration signal to the receivers RX which have already been aligned with respect to phase and delay. This is sufficient for the probe location measurement. Again, the location of the probe CMAN needs not to be known because it can be measured very accurately in a production environment by using an optimized external signal source and then at the field whenever there is a suspect that parameters have been changed.

It should be noted that the depicted embodiments are just examples how the teachings of the invention can be applied to antenna arrays. One skilled in the art will easily derive further embodiment without departing from the scope of the invention.

Finally, it should be noted that the above-mentioned embodiments illustrate rather than limit the invention, and that those skilled in the art will be capable of designing many alternative embodiments without departing from the scope of the invention as defined by the appended claims. In the claims, any reference signs placed in parentheses shall not be construed as limiting the claims. The verb "comprise" and its conjugations do not exclude the presence of elements or steps other than those listed in any claim or the specification as a whole. The singular reference of an element does not exclude the plural reference of such elements and vice-versa. In a device claim enumerating several means, several of these means may be embodied by one and the same item of software or hardware. The mere fact that certain measures are recited in mutually different dependent claims does not indicate that a combination of these measures cannot be used to advantage.

### List of references:

- AN: antenna
- BF: beam former
- CIR: circulator
- CM: calibration module
- CMAN: antenna of calibration module
- DF: duplex filter
- DPD: digital pre distortion device
- RP: reflection point
- RX: receiver
- RXC: receiver correlator
- SW: switch
- TX: transmitter
- TXC: transmitter correlator

## Claims

1. Method of calibrating an active antenna, which active antenna is designed to be used in a base transceiver station for mobile communication, the method comprising the steps of:
a) correlating at least one receiver (RX) of the active antenna to a calibration signal;
b) analyzing a received phase pattern and adjusting the active antenna until all receivers (RX) receive substantially in equiphase; and
c) applying a beam forming function and a phase pattern as forward adjustment to the active antenna.

2. Method as claimed in claim 1 for calibrating the receiver (RX) of the active antenna, comprising the steps of:
a1) correlating the at least one receiver (RX) to a calibration signal at a receiver band;
b1) analyzing a received phase pattern and adjusting the active antenna until all receivers (RX) receive substantially in equiphase; and
c1) applying a beam forming function and a phase pattern as forward adjustment to the receivers (RX) of active antenna, wherein steps a1-c1) are performed instead of steps a)-c).

3. Method as claimed in claim 2, comprising the steps of:
a2) switching off transmitters (TX) of the active antenna before step a1) and
d) switching on the transmitters (TX) after step c1).

4. Method as claimed in claim 1 for calibrating a transmitter (TX) of the active antenna, comprising the steps of:
a0) switching at least one receiver (RX) of the active antenna to a transmit band of at least one transmitter (TX) of the active antenna;
a1) correlating the at least one receiver (RX) to a calibration signal at the transmit band;
b1) switching on the reflection means so that the at least one receiver (RX) receives a signal at the transmit band;
c1) analyzing a received phase pattern and adjusting the active antenna until all receivers (RX) receive signals from the transmitters (TX) substantially in equiphase; and
d) applying a beam forming function and a phase pattern as forward adjustment to the active antenna, wherein
steps a1)-c1) are performed instead of steps a)-c).

5. Method as claimed in claim 4, comprising the steps of:
a2) turning off the transmitters (TX) before step a0);
a3) capturing phase and delay of a calibration signal at the transmit band instead of step a1);
c2) turning on the transmitters (TX) and
c3) calibrating the at least one transmitter (TX) using phase and delay values of the reflected transmitter signal read from a digital pre distortion device (DPD) instead of step c1).

6. Method as claimed in any one of the claims 4 to 5, comprising the step of:
a4) calibrating the at least one receiver (RX) using external noise received through the antenna (AN) at a receiver band before step a0) respectively step a2).

7. Method as claimed in claim 6, comprising the steps of:
a5) switching off the transmitters (TX) before step a4)
a6) applying a beamforming function after step a4) and skipping step a2) if there is a step a2) else
a6) applying a beamforming function and subsequently turning on again the transmitters (TX) after step a4).

8. Method as claimed in any one of the claims 4 to 7, wherein a calibration signal is used, which does not overlap the channels used for normal operation of the base transceiver station and whose level is substantially lower than the level used for said channels.

9. Active antenna, designed to be used in a base transceiver station for mobile communication, the antenna comprising:
a) at least one receiver (RX);
b) a correlator to correlate the least one receiver (RX) to a calibration signal;
c) an analyzer for analyzing a received phase pattern and adjusting the active antenna until all receivers (RX) receive signals substantially in equiphase; and
d) means for applying a beam forming function and a phase pattern as forward adjustment to the active antenna.

10. Active antenna as claimed in claim 9, comprising:
a) at least one receiver (RX), which is able to receive signals at receive band;
b) a correlator to correlate the at least one receiver (RX) to a calibration signal at the receive band;
d) means for applying a beam forming function and a phase pattern as forward adjustment to the receivers (RX) of the active antenna.

11. Active antenna as claimed in claim 9, comprising:
a0) at least one transmitter (TX) designed to transmit signals at a transmit band;
a) at least one receiver (RX), which is able to receive signals at said transmit band;
a1) means for reflecting (RP) a portion of the power of the transmitted signals back to said at least one receiver (RX);
b) a correlator to correlate the at least one receiver (RX) to a calibration signal at the transmit band;
c) an analyzer for analyzing a received phase pattern and adjusting the active antenna until all receivers (RX) receive signals from the transmitters (TX) substantially in equiphase; and
d) means for applying a beam forming function and a phase pattern as forward adjustment to the transmitters (TX) of the active antenna.

12. Active antenna as claimed in claim 10 and 11 comprising:
a0) at least one transmitter (TX) designed to transmit signals at a transmit band;
a) at least one receiver (RX), which is able to receive signals at receive band and said transmit band; and
a1) means for reflecting (RP) a portion of the power of the transmitted signals back to said at least one receiver (RX);
b) a correlator to correlate the at least one receiver (RX) to a calibration signal at the receive band and the transmit band;
c) an analyzer for analyzing a received phase pattern and adjusting the active antenna until all receivers (RX) receive signals from the transmitters (TX) substantially in equiphase;
d) means for applying a beam forming function and a phase pattern as forward adjustment to the receivers (RX) and transmitters (TX) of the active antenna.

13. Active antenna as claimed in any one of the claims 11 to 12, wherein the reflecting means (RP) are designed is such a way that the reflection occurs in a single point and the reflected signal is identical for each receiver (RX).

14. Active antenna as claimed in any one of the claims 11 to 13, comprising:
- means for capturing phase and delay of a calibration signal at the transmit band and
- means for calibrating the at least one transmitter (TX) using phase and delay values of the reflected transmitter signal read from a digital pre distortion device (DPD).

15. Active antenna as claimed in any one of the claims 11 to 14, wherein:
- a receiver correlator (RXC) is connected to a beam former (BF), and the at least one receiver (RX) is connected to the receiver correlator (RXC);
- the at least one transmitter (TX) is connected to said beam former (BF);
- a transmitter correlator (TXC) is connected to the beam former (BF); and
- at least one duplex filter (DF) is connected to the at least one transmitter (TX) via at least one circulator (CIR) and directly connected to the at least one receiver (RX).
